# EUROPEAN PATENT APPLICATION

(11) **EP 1 462 426 A1**
(43) Date of publication of application: **29.09.2004**
(21) Application number: 03006525.4
(22) Date of filing: 22.03.2003
(51) Int. Cl.: C04B 35/26, B32B 18/00, H03H 1/00

(54) **Low temperature co-fired ferrite-ceramic composite and the process for manufacturing it**

(71) Applicant: ABC Taiwan Electronics Corp., Taoyuan Hsien (TW)
(72) Inventor: Hsu, Chaby, Taoyuan Hsien (TW)
(74) Representative: Panten, Kirsten

(57) **Abstract**

A low temperature co-fired ferrite-ceramic (FECERA) composite consisting of two different dielectric materials (Ceramic and Ferrite) can be used to make a diversification combination filter component by the process of a multi-layer passive component, so that the combination filter component can prevent the function of electromagnetic interference (EMI) and has an excellent electromagnetic couple effect.

## Description

The present invention relates to a low temperature co-fired ferrite-ceramic (we call it FECERA material) composite and the process for manufacturing it, and more particularly to a combination filter component that can prevent the electromagnetic interference and has an excellent electromagnetic couple effect.

The electromagnetic filter component can be made by the low temperature co-fired technology of two different dielectric materials, such as the ceramic material and the ferrite material, so that the electromagnetic filter component can be used to manufacture the capacitor material with a low loss and the inductor material with a high electromagnetic couple effect. Such a material may be used in the module development without considering the electromagnetic compatibility (EMC) problem.

The ceramic material is applied on a passive electronic component, such as the resistor, capacitor, inductor or the like. The chip type electronic component includes a thin film type and a thick film type. In fabrication of the thick film electronic component, the ceramic material provides the multi-layer chip capacitor (MLCC) with a steady-state material having a high dielectric value. Recently, the ceramic Al₂O₃ having a low dielectric value is the major material used for the high-frequency chip type inductor. In fabrication of the thin film electronic component, the ceramic material is the primary source of the substrate and the material.

Recently, the electronic component based on the ceramic material is developed in the following directions.
1. The electronic member has a small size, multiple layers and a high integrated, so that the electronic component satisfies the lightweight, thin, short and miniature requirements.
2. The electronic component is developed in a modularized manner. Thus, the electronic component uses the passive network components to integrate a plurality of passive components in a single chip, thereby reducing the number and area of the passive components on the printed circuit board (PCB), and thereby reducing costs of fabrication.

In the modularized development of the electronic component, the modularized procedure is first to integrate all of the passive components, such as the resistor, capacitor, inductor, transmission circuit, mating circuit or the like. Next, the modularized procedure is to provide an integrated functional module. Then, the modularized procedure is to integrate the functional module of two different dielectric materials (ceramic and ferrite).

Recently, the low temperature co-fired ceramic (LTCC) material is used in the wireless communication, satellite communication, circuit package and the like. In practice, the LTCC material is added with glass element, so that the sintered temperature can be reduced to about 850 to 950°C. Thus, the LTCC material can be co-fired with the high conductive metallic coating, such as the gold, silver, copper, Ag-Pd or the like, so as to provide the high quality factor (Q factor). In addition, the LTCC material can co-operate with the three-dimensional (3D) multi-layer structure, so as to provide a smaller size or a special specification. Exp.: chip filter, chip antenna, power amplifier, and blue-tooth module.

On the other hand, the plastic material is recently the primary material of the ball-grid array (BGA) of the multi-layer integrated circuit board.

However, the LTCC material has the following advantages.
1. The LTCC material can integrate the passive components, such as the resistor, capacitor, inductor, and transmission circuit, mating circuit or the like.
2. The LTCC material can integrate the passive circuit, such as the filter, mating line or the like.
3. The LTCC material has high- integrated interconnection, thereby shortening the size of the circuit, and thereby greatly reducing costs of fabrication.

Thus, the LTCC material will become the primary technology in the future.

After 1991, the manufacturers of the passive components in the world began to use the single ceramic material or the single ferrite material to make a simple LC filter, such as the T type filter, π type filter or the like. However, the filter component has a larger size, so that it is only available for the FM and AM broadcasting systems. In the recent years, the high frequency filter member, such as the blue-tooth, the wide channel wireless local area network (WLAN) or the like, is made by the multi-layer ceramic material whose dielectric value K is about 4.7 to 13.

The Japanese TDK Corporation has developed a low temperature co-fired ceramic-ferrite composite to manufacture the LC filter. However, the electric feature is not good. Recently, the Japanese NEG Corporation and the Korean Ceratech Corporation have developed a co-fired technology of two different dielectric materials similar to that of the Japanese TDK Corporation. However, the product easily cracks or tilts.

By using the features of two different dielectric materials, the effect of the electromagnetic couple of the filter is enhanced, so as to manufacture a filter component having a smaller volume (0603 in inch).

For example, many noise sources, such as the IC having interaction, are produced in the computer and are distributed in the whole frame. However, the capacitor or inductor having two terminals cannot filter the frequency contained in the produced noise. Thus, the designer uses the EMI (electromagnetic interface) LC filter to remove the noise, and uses the shield to eliminate the radiation noise. Usually, the EMI LC filter means a low pass filter consisting of the inductor and the capacitor. The low pass filter may consist of a single inductor and a single capacitor, and also may consist of multiple inductors and multiple capacitors, thereby forming a circuit member product having different states. The multi-layer chip EMI LC filter is to integrate multiple multi-layer chip inductors and multiple multi-layer chip capacitors by a circuit design and a procedure of multi-layer chip components, thereby forming a monolithic structure with a smaller size (3.2×1.6mm) available for the surface mount technology (SMT).

When the filter component is made of the single ceramic material using the LTCC process, in the figure of the insertion loss (dB) versus the frequency (Hz), we can see that the frequency band width is greater than 600MHz in the interval of the insertion loss of 3dB to 20dB, so that the filter component cannot be used to filter the voice system of the communication products.

When the filter component is made of the single ferrite material, the frequency the filter component is not very high (33k to 300MHz) because the single ferrite material lacks the ceramic dielectric material to provide the capacitance. Thus, the low frequency filter component made of the single ferrite material is usually made into a low pass filter that is used in the sound, broadcast, microphone or the like, so as to filter the low frequency noise.

Thus, the present invention is to provide a low temperature co-fired ferrite-ceramic composite to make the filter component, wherein the ceramic material provides the capacitance, and the ferrite material provides the inductance. In such a manner, multiple LC circuits are integrated in a single component, so that the size of the filter component can be reduced to 0805 or 0603. In addition, multiple capacitors and inductors are intensively integrated in a single component, so as to shorten the frequency width of the interval of the insertion loss of 3dB to 20dB.

In addition, when the low temperature co-fired ferrite-ceramic composite is integrated into an LC filter, the LC filter can be used to prevent the electromagnetic interference (EMI) function. Further, the low temperature co-fired ferrite-ceramic composite can be used in the modularized electronic product, thereby preventing the complicated design of EMC, and thereby making the module has a smaller size.

Accordingly, the present invention provides a low temperature co-fired ferrite-ceramic that can be used to make a diversification combination filter component, which can prevent the electromagnetic interference and has an excellent electromagnetic couple effect. Preferably, this combination filter component is an EMI LC filter. The ceramic material is added with a glass element. In addition, the present invention deals with the firing elongation and the adding amount of glass for two different dielectric materials, so that the two different dielectric materials can be combined in the optimum manner after the sintering process. In addition, the sintering elongation is related to the diameter of the powder and the thickness of the dielectric layer. Further, the present invention is to provide a low temperature co-fired ferrite-ceramic that can be used to make a diversification combination filter component by the procedure of a multi-layer passive component, so that the combination filter component can prevent the electromagnetic interference

The primary objective of the present invention is to provide a low temperature co-fired ceramic material, comprising a ceramic having a determined proportion, a SiO₂ having a determined proportion, and borax having a determined proportion so as to increase a structural strength.

Another objective of the present invention is to provide a process for preparing low temperature co-fired ceramic slurry, comprising the steps of:
mixing a ceramic having a determined proportion, a SiO₂ having a determined proportion, and borax having a determined proportion according to a dielectric constant value to form a ceramic material;
placing the ceramic material having a proper proportion into a ball mill jug;
adding a proper amount of alcohol, toluene and dispersant into the ball mill jug to form a ceramic slurry;
mortaring the ceramic slurry to have a determined diameter; and
adding a proper amount of binder and a proper amount of plasticizer into the ceramic slurry, thereby forming an uniform ceramic slurry mixture.

A further objective of the present invention is to provide a process for preparing low temperature co-fired ferrite slurry, comprising the steps of:
mixing proper amounts of Fe₂O₃, NiO, ZnO and CuO according to initial permeability values to form a ferrite material;
adding a proper amount of RO (reverse osmosis) water and a proper amount of dispersant into the ferrite material having a proper proportion, which are stirred evenly, and are dried, thereby forming a powder;
calcining the powder at a temperature of 750°C during 2 hours;
placing the calcined powder having a proper amount into a ball mill jug;
adding a proper amount of alcohol, toluene and dispersant into the ball mill jug to form a ferrite slurry;
mortaring the ferrite slurry to have a determined diameter; and
adding a proper amount of binder and a proper amount of plasticizer into the ferrite slurry, thereby forming an uniform ferrite slurry mixture.

A further objective of the present invention is to provide a low temperature co-fired ferrite-ceramic composite, comprising:
a low temperature co-fired ceramic material including a ceramic having a determined proportion, a SiO₂ having a determined proportion, and a borax having a determined proportion; and
a low temperature co-fired ferrite material including proper amounts of Fe₂O₃, NiO, ZnO and CuO.

A further objective of the present invention is to provide a process for making a combination filter component, comprising the steps of:
preparing a low temperature co-fired ceramic slurry;
preparing a low temperature co-fired ferrite slurry;
processing the prepared low temperature co-fired ceramic slurry by tape casting, punching, filling, and inter terminal printing, thereby forming a ceramic layer;
processing the prepared low temperature co-fired ferrite slurry by tape casting, punching, filling, and inter terminal printing, thereby forming a ferrite layer; and
processing the ceramic layer and the ferrite layer by laminating, equally pressing, cutting, co-firing, polishing, and terminal processing, thereby forming the combination filter component that can prevent the electromagnetic interference.

In the drawings:
Fig. 1 shows the proportion of the low temperature co-fired ceramic material in accordance with the preferred embodiment of the present invention;
Fig. 2 shows the proportion of the low temperature co-fired ferrite material in accordance with the preferred embodiment of the present invention;
Fig. 3 shows the co-firing curve in accordance with the preferred embodiment of the present invention;
Fig. 4 shows the inter terminal design and the laminating manner in accordance with the preferred embodiment of the present invention;
Fig. 5 is a perspective view of the LC filter in accordance with the preferred embodiment of the present invention; and
Fig. 6 shows the electrical characteristics features in accordance with the preferred embodiment of the present invention.

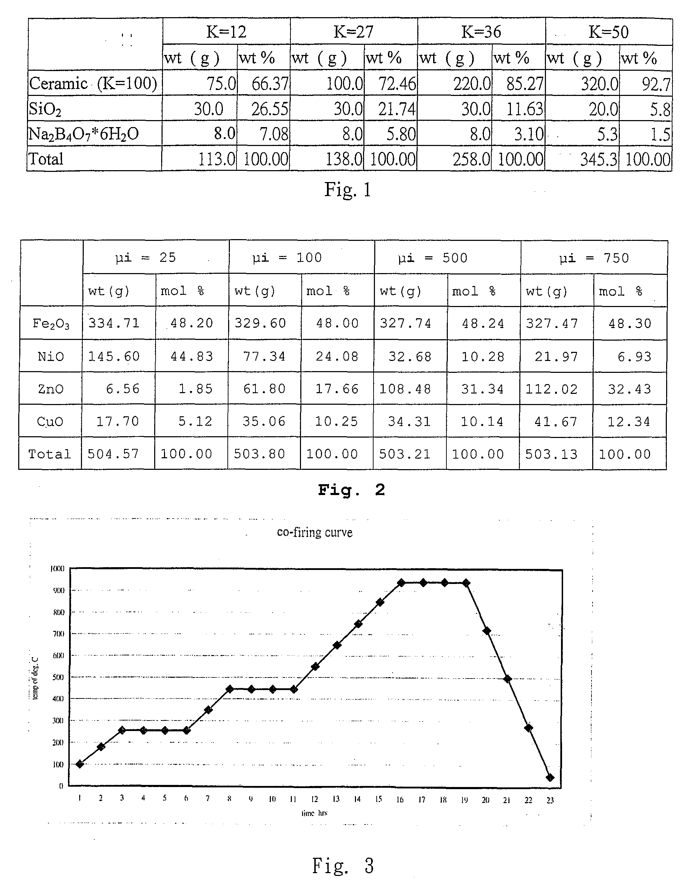

Referring to the drawings and initially to Fig. 1, the proportion of the low temperature co-fired ceramic material in accordance with the preferred embodiment of the present invention is shown. The low temperature co-fired ceramic (LTCC) material includes a ceramic having a determined proportion, and a SiO₂ having a determined proportion, wherein the proportion rates of the ceramic and the SiO₂ are determined according to the dielectric constant value. The low temperature co-fired ceramic (LTCC) material further includes borax (Na₂B₄O₇*6H₂O) having a determined proportion so as to increase the structural strength. As shown in Fig. 1, the proportion rates of the ceramic, the SiO₂ and the borax are determined according to four different dielectric constant values K, wherein K=12, 27, 36 and 50. Thus, the three components of the low temperature co-fired ceramic material can be laminated so as to obtain the optimum co-fired combination. In addition, the ratio of the SiO₂ and the borax is about 3.75 to 1.

Referring to Fig. 2, the proportion of the low temperature co-fired ferrite material in accordance with the preferred embodiment of the present invention is shown. As shown in Fig. 2, the proportion rates of the four components (Fe₂O₃, NiO, ZnO and CuO) of the low temperature co-fired ferrite material are determined according to four different initial permeability values µi, wherein µi=25, 100, 500 and 750. Thus, the ceramic material and the ferrite material can be co-fired in a laminating manner.

The ferrite material is a magnetic material. Thus, when the ferrite material is added with the glass element containing SiO₂, the magnetic material easily produces inductor characteristic unstable phenomenon due to existence SiO₂, and the RDC (resistance of direct current) of the passive component is increased. Thus, when the ceramic material and the ferrite material are co-fired in a laminating manner to make the electronic component having a sandwiched structure, it is appreciated that the ceramic layer needs to be added with the glass packing, and the ferrite layer cannot be added with the glass element containing SiO₂.

In addition, for achieving the optimum combination strength when two different dielectric materials are co-fired, it is necessary to consider the powder diameter and the lamination thickness of the two different dielectric materials. In the high temperature co-fired state, the maximum keeping temperature in the temperature increasing process affects the states between the particles, so that the control and setting of the firing technology plays an important role in combination of the two different dielectric materials.

Referring to Fig. 3, the co-firing curve in accordance with the preferred embodiment of the present invention is shown.

For the ceramic material, the powder diameter is smaller (0.13 to 0.23µm), and the dielectric thickness is smaller (20 to 25 µm). When the temperature exceeds 500°C, the glass components ( SiO₂ and Borax ) evenly distributed in the ceramic powders are softened, so that the material has the maximum elongation. Thus, when the temperature is increased, it is necessary to prevent the temperature from exceeding 500°C. In addition, the ceramic having a smaller powder diameter is used so as to reduce the elongation of material.

For the ferrite material, the powder diameter is about 0.45 to 0.50µm, and the dielectric thickness is about 55 to 65µm.

During the high temperature firing process, when the glass component of the ceramic has a peridot crystal, the crystal can naturally combine with the hexagonal crystalline structure of the ferrite rigidly. The temperature increasing conditions of the two different co-fired dielectric materials have different temperature increasing curves according to the sizes of the samples. The sample having a greater size has a greater surface area, so that the heat conduction is not even during the heating process at a lower temperature (150 to 250°C), thereby causing tilting of the material. Thus, the temperature increasing time needed to be prolonged during the heating process at a lower temperature.

The slurry in accordance with the preferred embodiment of the present invention is prepared as follows.

The ceramic slurry is prepared as follows.

First of all, the ceramic material having a proper proportion (e.g., K=27 in the preferred embodiment as shown in Fig. 1) is placed into a ball mill jug of the zirconium oxide (ZrO) balls according to a proper proportion (e.g., two times proportion in the preferred embodiment). In the preferred embodiment, the ball mill jug contains the ZrO balls having different powder diameters (e.g., φ₃₀: φ₁₀: φ₃ₘₘ=2:3:5). Then, a proper amount of alcohol, toluene and dispersant (e.g., alcohol of 108g, toluene of 150g, and dispersant byk-111 of 4.0g in the preferred embodiment) are added into the ball mill jug. The ball mill machine is operated at a lower rotation speed (e.g., 20 to 25rpm in the preferred embodiment). Thus, the above-mentioned ceramic slurry is mortared to have a proper diameter. In the preferred embodiment, the mortaring time is about 16 hours, and the diameter is about 0.13 to 0.23µm.

Secondly, a proper amount of binder (e.g., 70g in the preferred embodiment) and a proper amount (e.g., 2g in the preferred embodiment) of plasticizer (e.g., PEG-400 in the preferred embodiment) are added into the above-mentioned ceramic slurry having a proper amount (e.g., 200g in the preferred embodiment), thereby forming an uniform ceramic slurry mixture.

The ferrite slurry is prepared as follows.

First of all, a proper amount of RO (reverse osmosis) water (e.g., 300ml in the preferred embodiment) and a proper amount (e.g., 3g in the preferred embodiment) of dispersant (e.g., byk-111 in the preferred embodiment) are added into the ferrite material having a proper proportion (e.g., µi=500 in the preferred embodiment as shown in Fig. 2), are then stirred evenly, and are then dried, thereby forming powder.

Then, the powder is calcined at the temperature of 750°C during 2 hours.

Then, the calcined powder having a proper amount (e.g., 400g in the preferred embodiment) is placed into the ball mill jug of the zirconium oxide (ZrO) balls. In the preferred embodiment, the ball mill jug contains the ZrO balls having different powder diameters (e.g., φ₃₀: φ₁₀: φ₃ₘₘ=2:3:5). Then, a proper amount of alcohol, toluene and dispersant (e.g., alcohol of 72g, toluene of 108g, and dispersant byk-111 of 4g in the preferred embodiment) are added into the ball mill jug. Thus, the above-mentioned ferrite slurry is mortared to have a proper diameter. In the preferred embodiment, the mortaring time is about 16 hours, and the diameter is about 0.45 to 0.50µm.

Then, a proper amount of binder (e.g., 75g in the preferred embodiment) and a proper amount (e.g., 3g in the preferred embodiment) of plasticizer (e.g., PEG-400 in the preferred embodiment) are added into the above-mentioned ferrite slurry having a proper amount (e.g., 300g in the preferred embodiment), thereby forming an uniform ferrite slurry mixture.

The combination filter component in accordance with the preferred embodiment of the present invention is used to prevent the electromagnetic interference. The combination filter component is made by a post-stage drying multi-layer type procedure.

The procedure for making the combination filter component comprises the following steps.

First of all, the prepared ceramic slurry is processed by tape casting, punching, filling, and inter terminal printing, thereby forming a ceramic layer. Then, the prepared ferrite slurry is processed by tape casting, punching, filling, and inter terminal printing, thereby forming a ferrite layer. Then, the ceramic layer and the ferrite layer are processed by laminating, equally pressing, cutting, co-firing, polishing, and terminal processing, thereby forming the combination filter component that can prevent the electromagnetic interference.

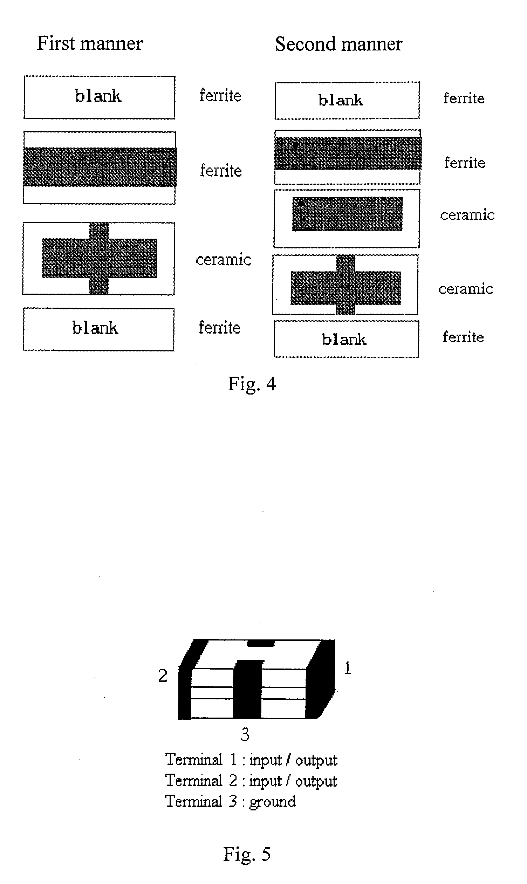

Referring to Fig. 4, the inter terminal design and the laminating manner are shown, wherein two laminating manners are shown in Fig. 4.

Fig. 5 is a perspective view of the LC filter in accordance with the preferred embodiment of the present invention.

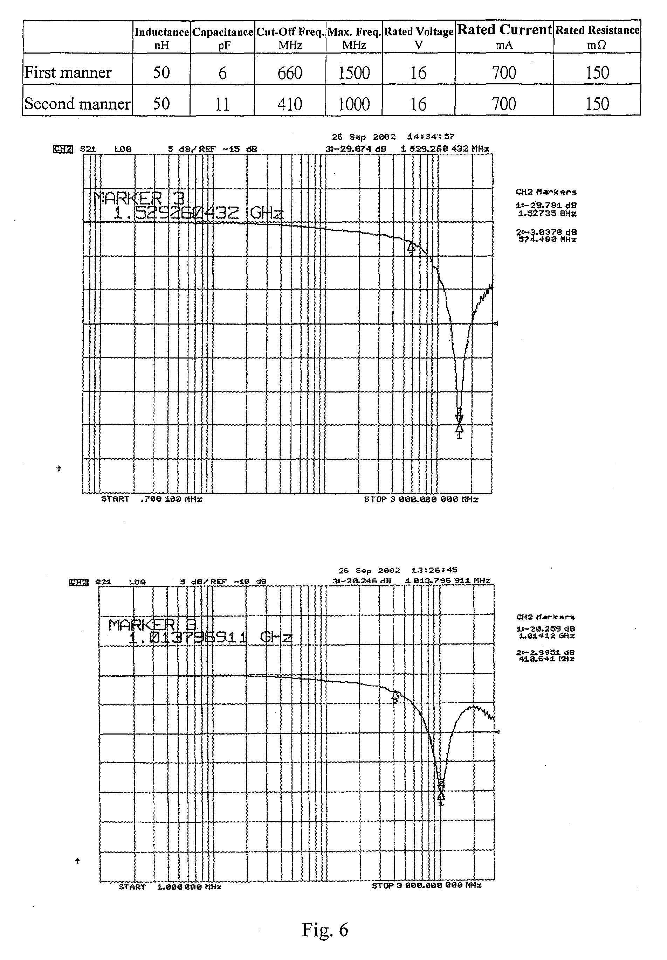

Fig. 6 shows the electric features of the two laminating manners in accordance with the preferred embodiment of the present invention.

## Claims

1. A low temperature co-fired ceramic material, comprising a ceramic having a determined proportion, a SiO₂ having a determined proportion, and a borax having a determined proportion so as to increase a structural strength.

2. The low temperature co-fired ceramic material in accordance with claim 1, wherein the proportion rates of the ceramic and the SiO₂ are determined according to a dielectric constant value.

3. A process for preparing low temperature co-fired ceramic slurry, comprising the steps of:
mixing a ceramic having a determined proportion, a SiO₂ having a determined proportion, and a borax having a determined proportion according to a dielectric constant value to form a ceramic material;
placing the ceramic material having a proper proportion into a ball mill jug;
adding a proper amount of alcohol, toluene and dispersant into the ball mill jug to form a ceramic slurry;
mortaring the ceramic slurry to have a determined diameter; and
adding a proper amount of binder and a proper amount of plasticizer into the ceramic slurry, thereby forming an uniform ceramic slurry mixture.

4. The process for preparing the low temperature co-fired ceramic slurry in accordance with claim 3, wherein the diameter of the ceramic slurry is about 0.13 to 0.23 µm.

5. The process for preparing the low temperature co-fired ceramic slurry in accordance with claim 3, wherein the ball mill jug contains zirconium oxide (ZrO) balls having different powder diameters.

6. The process for preparing the low temperature co-fired ceramic slurry in accordance with claim 3, wherein the ball mill jug has a ball mill machine operated at a relatively lower rotation speed.

7. A process for preparing low temperature co-fired ferrite slurry, comprising the steps of:
mixing proper amounts of Fe₂O₃, NiO, ZnO and CuO according to initial permeability values to form a ferrite material;
adding a proper amount of RO (reverse osmosis) water and a proper amount of dispersant into the ferrite material having a proper proportion, which are stirred evenly, and are dried, thereby forming a powder;
calcining the powder at a temperature of 750°C during 2 hours;
placing the calcined powder having a proper amount into a ball mill jug;
adding a proper amount of alcohol, toluene and dispersant into the ball mill jug to form a ferrite slurry;
mortaring the ferrite slurry to have a determined diameter; and
adding a proper amount of binder and a proper amount of plasticizer into the ferrite slurry, thereby forming an uniform ferrite slurry mixture.

8. The process for preparing the low temperature co-fired ferrite slurry in accordance with claim 7, wherein the ball mill jug contains zirconium oxide (ZrO) balls having different powder diameters.

9. The process for preparing the low temperature co-fired ferrite slurry in accordance with claim 7, wherein the diameter of the ferrite slurry is about 0.45 to 0.53µm.

10. A low temperature co-fired ferrite-ceramic composite, comprising:
a low temperature co-fired ceramic material including a ceramic having a determined proportion, a SiO₂ having a determined proportion, and a borax having a determined proportion; and
a low temperature co-fired ferrite material including proper amounts of Fe₂O₃, NiO, ZnO and CuO.

11. The low temperature co-fired ferrite-ceramic composite in accordance with claim 10, wherein the proportion rates of the ceramic and the SiO₂ are determined according to a dielectric constant value.

12. The low temperature co-fired ferrite-ceramic composite in accordance with claim 10, wherein the proportion rates of Fe₂O₃, NiO, ZnO and CuO are determined according to initial permeability values.

13. A process for making a combination filter component, comprising the steps of:
preparing a low temperature co-fired ceramic slurry;
preparing a low temperature co-fired ferrite slurry;
processing the prepared low temperature co-fired ceramic slurry by tape casting, punching, filling, and inter terminal printing, thereby forming a ceramic layer;
processing the prepared low temperature co-fired ferrite slurry by tape casting, punching, filling, and inter terminal printing, thereby forming a ferrite layer; and
processing the ceramic layer and the ferrite layer by laminating, equally pressing, cutting, co-firing, polishing, and terminal processing, thereby forming the combination filter member that can prevent the electromagnetic interference.

14. The process for making a combination filter component in accordance with claim 13, wherein the step of preparing low temperature co-fired ceramic slurry comprises the steps of:
mixing a ceramic having a determined proportion, a SiO₂ having a determined proportion, and a borax having a determined proportion according to a dielectric constant value to form a ceramic material;
placing the ceramic material having a proper proportion into a ball mill jug;
adding a proper amount of alcohol, toluene and dispersant into the ball mill jug to form a ceramic slurry;
mortaring the ceramic slurry to have a determined diameter; and
adding a proper amount of binder and a proper amount of plasticizer into the ceramic slurry, thereby forming an uniform ceramic slurry mixture.

15. The process for making a combination filter component in accordance with claim 13, wherein the step of preparing a low temperature co-fired ferrite slurry comprises the steps of:
mixing proper amounts of Fe₂O₃, NiO, ZnO and CuO according to initial permeability values to form a ferrite material;
adding a proper amount of RO (reverse osmosis) water and a proper amount of dispersant into the ferrite material having a proper proportion, which are stirred evenly, and are dried, thereby forming a powder;
calcining the powder at a temperature of 750°C during 2 hours;
placing the calcined powder having a proper amount into a ball mill jug;
adding a proper amount of alcohol, toluene and dispersant into the ball mill jug to form a ferrite slurry;
mortaring the ferrite slurry to have a determined diameter; and
adding a proper amount of binder and a proper amount of plasticizer into the ferrite slurry, thereby forming an uniform ferrite slurry mixture.
